# EUROPEAN PATENT APPLICATION

(11) **EP 2 508 335 A1**
(43) Date of publication of application: **10.10.2012**
(21) Application number: 09851830.1
(22) Date of filing: 01.12.2009
(51) Int. Cl.: B31F 1/07

(54) **FLEXIBLE DIE**

(71) Applicant: Tsukatani Hamono MFG. CO., Ltd., Osaka 581-0814 (JP)
(72) Inventor: NAKATA, Masahiro, Yao-shi Osaka 581-0814 (JP)
(74) Representative: Schubert, Siegmar
(86) International application number: PCT/JP2009/070153
(87) International publication number: WO 2011/067822

(57) **Abstract**

A flexible die (1) is for use in an embossing apparatus. The embossing apparatus includes a pair of flexible bases (2a, 2b) wound around a pair of respective cylindrical rollers disposed in opposing arrangement. A processed sheet (S) is passed through between the pair of cylindrical rollers so as to carry out Braille embossing. The pair of flexible bases (2a, 2b) include a female flexible base (2a) and a male flexible base (2b) that are configured to mate with one another. The male flexible base (2b) includes male projections (3b) corresponding to a Braille character to be formed on the processed sheet (S). The female flexible base (2a) includes female projections (3b) including depressions (30) configured to fit with the respective male projections (3b).

## Description

### Technical Field

The present invention relates to a flexible die (sheet-shaped blade plate) used for embossing on sheet materials (processed sheets) such as paper sheets, and plastic sheets (films), and more particularly, to a flexible die used for Braille embossing on sheet materials.

### Background Art

Embossing a processed object to form Braille characters (such embossing being hereinafter referred to as "Braille embossing") has involved difficulty in reliably forming distinct embossed dots due to the small nature of the Braille characters. In view of this, patent document 1, for example, proposes an embossing device including a depressed mold Braille forming plate and a projecting mold Braille forming plate used to emboss an original paper. The depressed mold Braille forming plate is attached to a board, while the projecting mold Braille forming plate is attached to another board. An elastic material is attached to one of the plates so as to support the depressed mold Braille forming plate or the projecting mold Braille forming plate.

When Braille embossed dots are formed on a processed sheet by the technology described in patent document 1, the Braille forming plates on their respective boards are placed in opposing arrangement so as to fit the depressed mold and the projecting mold with one another across the processed sheet. Unfortunately, a problem arises in that the Braille embossed dots cannot be rapidly formed in large numbers.

In view of this, in order to rapidly form a large number of Braille embossed dots, a Braille embossing device is proposed that includes a metallic roller with Braille forming protrusions and an elastic roller around which an elastic material is wound. The metallic roller and the elastic roller are placed in opposing arrangement across a processed sheet, and drivingly rotated to form Braille embossed dots (see, for example, patent document 2).

### Related Art Documents

### Patent Documents

Patent document 1: Japanese Unexamined Patent Application Publication No. 2004-268464.
Patent document 2: Japanese Unexamined Patent Application Publication No. 2006-235264.

### Summary of the Invention

### Problems to be Solved by the Invention

When Braille embossed dots are formed on the processed sheet by the technology described in patent document 2, the processed sheet is placed between the Braille-protrusions-formed metallic roller and the elastic roller. This causes the Braille protrusions to press the elastic roller, and the resulting elastic deformation is utilized in the formation of the Braille embossed dots. Unfortunately, when the pressing force of the Braille protrusions is weak, distinct Braille embossed dots cannot be formed. When the pressing force of the Braille protrusions is excessively strong, a problem arises in that the processed sheet can be broken.

The present invention has been achieved in view of the above circumstances, and it is an object of the present invention to provide a flexible die for Braille embossing that rapidly forms a large number of distinct Braille embossed dots with high processing accuracy. Means of Solving the Problems

A flexible die according to the present invention is for use in an embossing apparatus. The embossing apparatus includes a pair of flexible bases each including embossing projections formed on one surface of each of the pair of flexible bases. The pair of flexible bases are wound around a pair of respective cylindrical rollers disposed in opposing arrangement. The embossing apparatus is configured to carry out Braille embossing by passing a processed sheet through between the pair of cylindrical rollers. The pair of flexible bases include a female flexible base and a male flexible base that are configured to mate with one another. The projections of the male flexible base include male projections corresponding to a Braille character to be formed on the processed sheet, while the projections of the female flexible base include depressions configured to fit with the respective male projections.

With the present invention, a male flexible base includes male projections that corresponds to a Braille character to be formed on a processed sheet. The male flexible base mates with a female flexible base including female projections that include depressions to fit with the male projection. This ensures that when the processed sheet is interposed between the flexible bases, distinct Braille embossed dots are formed on the processed sheet with high processing accuracy.

The flexible die according to the present invention is used in an embossing apparatus that includes a pair of flexible bases wound around a pair of respective cylindrical rollers disposed in opposing arrangement, and that carries out Braille embossing by passing a processed sheet through between the pair of cylindrical rollers. This ensures that a large number of distinct Braille embossed dots are formed rapidly with high processing accuracy. Additionally, the Braille character to be formed on the processed sheet can be changed with another by merely replacing the flexible bases. This ensures economy and facilitated handling.

In the flexible die according to the present invention, the depressions of the female flexible base may be configured to fit with the respective male projections with a gap relative to an inner circumferential surface of each of the male projections.

With this invention, the depressions of the female flexible base fit with the male projections of the male flexible base with a predetermined gap corresponding to, for example, the material and the thickness of the processed sheet. This ensures distinct Braille embossed dots of high processing accuracy.

In the flexible die according to the present invention, the pair of flexible bases each may include furrows on another surface of each of the pair of flexible bases opposite the one surface on which the embossing projections are formed. The furrows may be formed at 3 least over a portion of the other surface corresponding to an area of the one surface in which the embossing projections are formed.

In this invention, a single furrow may be formed on the other surface of each flexible base. Alternatively, a plurality of furrows may be arranged on the other surface of each flexible base at predetermined spatial intervals along the direction in which each flexible die is wound around the corresponding roller. In the case of a plurality of furrows, the plurality of furrows may be formed approximately throughout the other surface of the flexible base. The furrows are preferably formed to extend in a direction intersecting the roller wrapping direction, in particular, a direction crossing the roller wrapping direction at right angles.

With this invention, a plurality of furrows are (or a single furrow is) formed on the other surface of each flexible base opposite the surface on which the embossing projections of each flexible base are formed. The plurality of furrows extend (or the single furrow extends) in a direction that crosses, at right angles, the direction in which each flexible base is wound around the corresponding roller (hereinafter referred to as the roller wrapping direction) of the flexible die. This ensures less flexural rigidity at the portions where the furrows are formed, facilitating the bending of the portions where the embossing projections are formed. This ensures that at the time of winding each flexible die around the corresponding roller, the portions where the embossing projections are formed are easily bent along the outer circumferential surface of the roller. This ensures that when the flexible die is mounted to the roller, no "base lift" occurs, that is, there is no such phenomenon as "degraded windability of the flexible die around the roller, which can make the flexible die partially lifted off the outer circumferential surface of the magnet roller".

It is noted that the present invention finds applications in flexible dies mounted around rollers without magnets (permanent magnets), as well as in flexible dies mounted around magnet rollers.

### Effects of the Invention

The flexible die according to the present invention rapidly forms a large number of distinct Braille embossed dots with high processing accuracy.

### Brief Description of the Drawings

[FIG 1] FIG. 1 is a front view of an exemplary flexible die according to the present invention and a longitudinal sectional view of main parts of the exemplary flexible die.
[FIG. 2] FIG. 2 is a front view of the exemplary flexible die according to the present invention and a longitudinal sectional view of main parts of the exemplary flexible die.
[FIG 3] FIG. 3 is a cross-sectional view of the flexible die according to the present invention.
[FIG. 4] FIG 4 is a perspective view of the flexible die according to the present invention, schematically illustrating the flexible die in wound state around a roller.
[FIG 5] FIG 5 is a schematic cross-sectional view of the flexible die according to the present invention, schematically illustrating the flexible die in wound state around the roller.
[FIG. 6] FIG 6 is a cross-sectional view of the flexible die according to the present invention.
[FIG. 7] FIG 7 is a cross-sectional view of the flexible die according to the present invention.
[FIG. 8] FIG. 8 is a diagram illustrating an opposite surface of the flexible die.
[FIG. 9] FIG. 9 is a diagram schematically illustrating an exemplary method for producing the flexible die according to the present invention.
[FIG. 10] FIG. 10 is a cross-sectional view of the flexible die according to the present invention.

### Modes for Carrying out the Invention

Embodiments of the present invention will be described below by referring to the drawings.

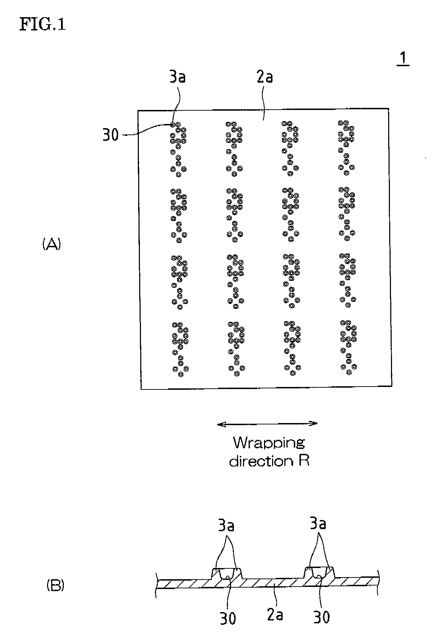

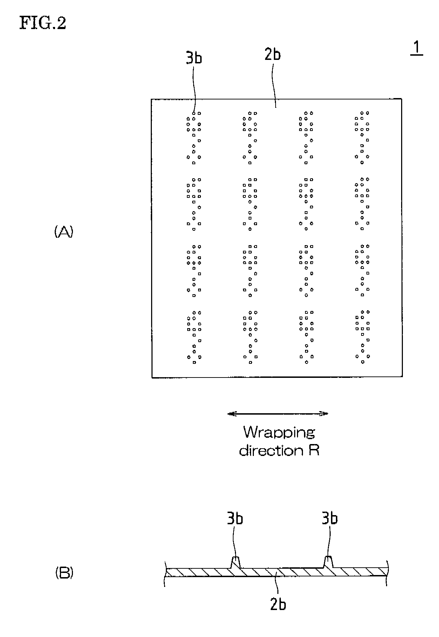

FIGs. 1(A) and 2(A) are front views of an exemplary flexible die according to the present invention. FIGs. 1(B) and 2(B) are longitudinal sectional views of a main part of the flexible die.

First, the flexible die will be described.

A conventionally employed method of processing such as blanking and half-cutting is: to mill a die board such as of plywood so as to form grooves corresponding to the blanking pattern; to fit strip blades (Thomson blades) into the processed grooves so as to form a die; and to mount the die in a press working machine or other machine so as to carry out punching or half-cutting of plastic sheets or other material.

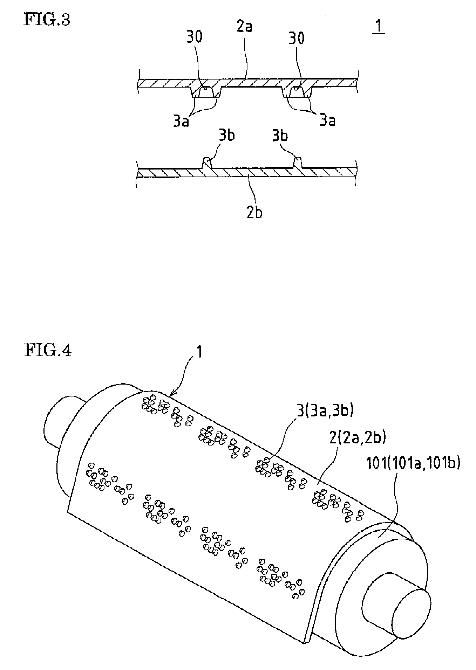

A recently employed method is: to fabricate a flexible die that includes a flexible base (ferromagnetic body) and push-cutting blades, on one surface of the flexible base, having a pattern corresponding to the shape of the cutting lines; and to wind the flexible die around a magnet roller 101 of a rotary processing device as shown in FIG. 4, so as to carry out punching or half-cutting of paper sheets, plastic sheets, and other material. A large number of permanent magnets are embedded in the outer circumferential surface of the magnet roller 101 for the purpose of stable magnetic attraction of the flexible die.

Similarly, a method employed in the embossing of the surfaces of sheet materials such as paper sheets and plastic sheets (films) is: to fabricate a flexible die that includes a flexible base (ferromagnetic body) and embossing depressions and projections, on one surface of the flexible base, having a predetermined pattern; and to wind the flexible die around the magnet roller 101 of the rotary processing device, so as to emboss the surfaces of plastic sheets or other material. Examples of the flexible die for embossing include a flexible die that includes processing projections of a predetermined pattern on a surface of a flexible base, and a flexible die that includes processing depressions of a predetermined pattern on a surface of a flexible base. Generally, a flexible die including processing projections formed in a planar pattern is used.

Then, the flexible dies described above are manufactured by machining or etching, and those manufactured by etching are generally referred to as etching dies.

A flexible die 1 according to this embodiment is for use in an embossing apparatus. The embossing apparatus includes a pair of flexible bases 2a and 2b each having embossing projections on one surface of each of the pair of flexible bases 2a and 2b. The pair of flexible bases 2a and 2b are respectively wound around a pair of cylindrical rollers 101a and 101b disposed in opposing arrangement. A processed sheet S is passed through between the pair of rollers 101a and 101b so as to carry out Braille embossing.

The pair of flexible bases 2a and 2b are respectively a female flexible base 2a and a male flexible base 2b that mate with one another.

On the male flexible base 2b, male projections 3b (embossing projections) are formed to correspond to a Braille character to be formed on the processed sheet S. On the female flexible base 2a, female projections 3a (embossing projections) are formed including depressions 30 to be fitted with the male projection 3b.

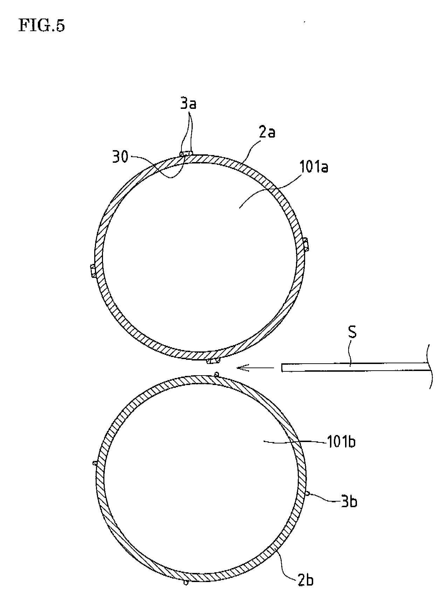

The flexible bases 2 thus configured is used in a rotary processing apparatus by being wound around the rotary magnets 101 (101a, 101b) as shown in FIGs. 4 and 5.

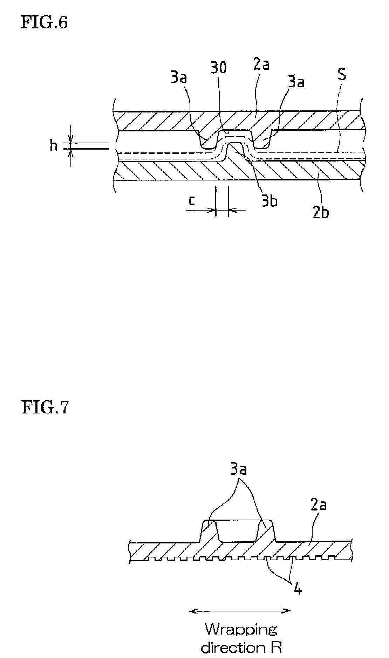

Specifically, the female flexible base 2a and the male flexible base 2b are respectively wound around the pair of cylindrical rollers 101 and 101 b, which are disposed in opposing arrangement. The processed sheet S is passed through between the pair of rollers 101 and 101b. The female projections 3a of the female flexible base 2a mate with the respective male projections 3b of the male flexible base 2b with the sheet S held between the female projections 3a and the male projections 3b. Thus, the sheet S is pressed and embossed (see FIGs. 5 and 6).

Incidentally, a clearance c is left between the female projection 3a and the male projection 3b when they mate with one another, that is, a gap is left between the inner circumferential surface of the female projection 3a of the female flexible base 2a and the outer circumferential surface of the male projection 3b of the male flexible base 2b (see FIG. 6), preferably in the range of 20% to 200% of the thickness of the processed sheet S.

The setting range of the clearance c is based on the following experiment results and is appropriately determined in consideration of the material, thickness, and the like of the sheet S.

For example, an experiment was carried out using a 0.12 mm-thick sheet S of Kraft paper. As a result, the sheet S was torn at a clearance c of smaller than 40% of the paper thickness (approximately 0.05 mm), while at a clearance c of larger than 200% of the paper thickness (0.24 mm), distinct embossing could not be achieved. Another experiment was carried out using a 0.1 mm-thick film sheet S of PET (polyethylene terephlhalate). As a result, the sheet S was torn at a clearance c of smaller than 20% of the paper thickness (approximately 0.02 mm), while at a clearance c of larger than 200% of the paper thickness (0.2 mm), distinct embossing could not be achieved.

Further, an elevation difference (level difference) h (see FIG. 6) exists between the upper end edges of the female projection 3a and the male projection 3b when they mate with one another. The level difference h is suitably determined in consideration of the material, the thickness of the sheet S, the above-described clearance c, and the like.

Various sheets may be used as the sheet S used in the present invention. Examples include paper, plastic sheets such as resin sheets, and labels with releasing papers adhered on the back.

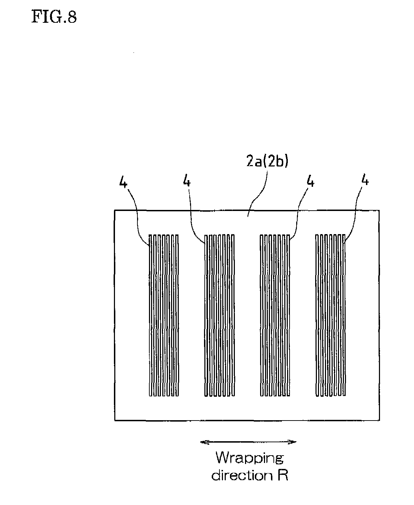

The flexible bases 2 (2a, 2b) each include a plurality of slit-shaped furrows 4 on the other surface of each of the flexible bases 2 (2a, 2b) (opposite the forming surface on which the female projections 3a or the male projections 3b are formed (rear surface)). The furrows 4 are formed at least over a portion of the other surface corresponding to the area of the forming surface in which the female projections 3a or the male projections 3b are formed. The furrows 4 extend in a direction crossing a roller wrapping direction R at right angles, and are disposed at predetermined intervals along the roller wrapping direction R (see FIGs. 7 and 8). This case ensures less flexural rigidity at the portions where the group of furrows are formed, facilitating the bending of the portions where the embossing projections (the female projection 3a and the male projection 3b) are formed. This ensures that at the time of winding each flexible die around the corresponding roller, the portions where the embossing projections (the female projections 3a and the male projections 3b) are formed are easily bent along the outer circumferential surface of the roller. This ensures that when the flexible die is mounted to the roller, no "base lift" occurs.

Thus, a plurality of slit-shaped furrows (slit-shaped grooves) 4 extending in a direction crossing the roller wrapping direction R at right angles are formed on the other surface of the flexible base 2 (2a, 2b) (rear surface). This ensures that the flexible base 2 (2a, 2b) are wound around the magnet roller 101 (101a, 101b) without "base lift". This will be described below.

The flexible die 1 has the embossing projections (in particular, projections in a planar pattern) and, therefore, has high rigidity and is resistant to bending at the portions where the embossing projections are formed. Without the furrows formed on the rear surface of the flexible base 2 (2a, 2b), substantially no bending occurs at the portions where the embossing projections are formed when the flexible base 2 (2a, 2b) is wound around the magnet roller 101. This causes "base lift" between adjacent processing patterns.

In contrast, a plurality of furrows 4 extending in a direction crossing the roller wrapping direction R at right angles may be formed on the rear surface opposite the portions where the embossing projections are formed. This ensures that even though the flexural rigidity is high at the portions where the embossing projections are formed, the portion where the furrows 4 are formed is deformed and bent when the flexible die 1 is wound around the magnet roller 101. This ensures that the portions where the embossing projections are formed are deformed and bent along the outer circumferential surface of the magnet roller 101. This ensures that when the flexible die 1 is mounted to the magnet roller 101, no "base lift" occurs. This results in accurate embossing.

The determination of the width and depth of the slit-shaped furrows 4 formed on the rear surface of the flexible base 2, and the determination of the intervals at which the slit-shaped furrows 4 are disposed in the roller wrapping direction R are made so as to prevent occurrence of "base lift" when the flexible die 1 is wound around the magnet roller 101. Specifically, the determinations are made based on experiments, calculations, and the like in consideration of the thickness of the flexible base 2, the flexural rigidity of the portions where the embossing projections 3 are formed, the curvature of the outer circumferential surface of the magnet roller 101, and the like.

The plurality of furrows 4 are formed only over the portion of the rear surface of the flexible base 2 corresponding to the area of the one surface in which the embossing projections 3 are formed. This, however, should not be construed in a limiting sense. The plurality of furrows 4 may be formed approximately throughout the rear surface of the flexible base 2. Additionally, the cross-section of each furrow 4 is not limited to a quadrangular shape, and may be have any other shape such as a semicircular shape and a triangular shape.

In the examples shown in FIGs. 7 and 8, the plurality of furrows 4 are formed on the rear surface of the flexible base 2. However, for example, if the pattern width of the embossing projection in the wrapping direction R is small, a single furrow 4 may be formed on the other surface of the portions where the embossing projections are formed.

The furrows 4 are not limited to a plurality of slit-shaped furrows extending in a direction crossing the roller wrapping direction R at right angles. For example, the furrows 4 may be formed along a direction intersecting the roller wrapping direction R.

The slit-shaped furrows 4 may be formed only on the flexible base 2a, where the female projections 3a are formed, while no slit-shaped furrows 4 may be formed on the flexible base 2b, where the male projections 3b are formed. This is because the male projections 3b are in the form of dots that make the consideration of "base lift" less necessary when the flexible die is mounted to the roller.

### -Method for Manufacture-

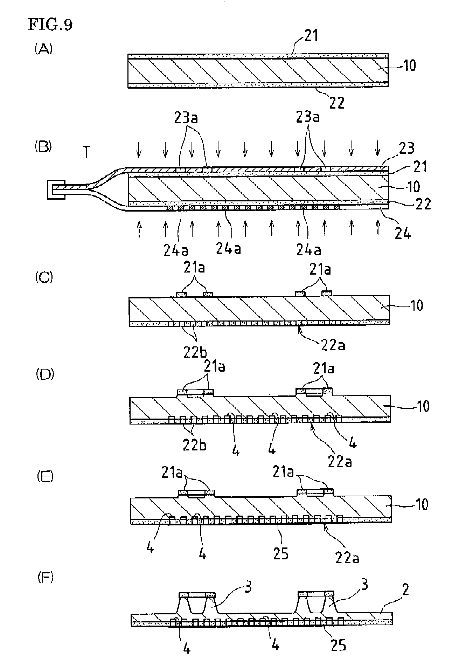

Next, an exemplary method for manufacturing the flexible die shown in FIGs. 7 and 8 will be described by referring to FIG. 9.

The female flexible base 2a and the male flexible base 2b are only different from one another in the sizes of the planar shaped patterns in which the projection 3a and 3b are formed. Otherwise, the female flexible base 2a and the male flexible base 2b are manufactured in mutually similar methods. The following method for manufacture is common to the female flexible base 2a and the male flexible base 2b. For the sake of convenience, the flexible base 2 and the embossing projections 3 are used in the following description.

(1) First, a photomask (negative film) 23 is fabricated having exposure patterns 23a corresponding to the embossing projections 3 (3a, 3b) shown in FIGs. 1 and 2. A photomask (positive film) 24a is also fabricated having exposure patterns corresponding to the slit-shaped furrows 4 on the rear surface of the flexible base 2 (2a, 2b).

(2) As shown in FIG. 9(A), a photoresist is applied uniformly over the front surface of a metal plate 10, and a photoresist is applied uniformly over the rear surface of the metal plate 10. Thus, photoresist films 21 and 22 are respectively formed on the front surface and rear surfaces of the metal plate 10.

(3) As shown in FIG. 9(B), the photomask (negative film) 23 is placed and positioned on the photoresist film 21 on the front surface of the metal plate 10, while the photomask (positive film) 24 is placed and positioned on the photoresist film 22 on the rear surface of the metal plate 10. The photomask 23 on the front surface side of the metal plate 10 is aligned with the photomask 24 on the back side of the metal plate 10 based on a resist mark as a reference. The photomasks 23 and 24 are coupled to one another at one end side using an adhesive tape T.

(4) The photoresist films 21 and 22 respectively on the front surface and the rear surface of the metal plate 10 are exposed and developed. Thus, a resist pattern 21a and a resist pattern 22a are formed. The resist pattern 22a has openings 22b at positions corresponding to the plurality of furrows 4 (FIG. 9(C)).

(5) The metal plate 10 is etched using the resist patterns 21a and 22a respectively on the front surface and the rear surface of the metal plate 10 as masks. The etching of the metal plate 10 is temporarily suspended when it is etched to a depth corresponding to the depth of each furrow 4 (FIG. 9(D)). As a result of this first etching, a plurality of slit-shaped furrows 4 extending in a direction crossing the roller wrapping direction R at right angles are formed on the rear surface of the flexible base 2 at equal intervals along the roller wrapping direction R. Thus, etching the furrows 4 first of all ensures accurate control of the depth of the furrows 4, and this facilitates adjustment of the flexural rigidity at the portions where the furrows 4 are formed.

(6) As shown in FIG. 9(E), a masking sheet 25 is adhered to the rear surface of the metal plate 10 so as to protect the slit-shaped furrows 4 formed by the previous etching against etchant. The metal plate 10 in this state is etched again. This second etching is discontinued upon reaching a predetermined depth (depth in consideration of [height of the embossing projection 3 (3a, 3b)] - [depth of each furrow 4]). As a result of this etching, the flexible base 2 (2a, 2b) and projections having trapezoidal cross-sections (projecting streaks), that is, the embossing projections 3 (3a, 3b) as shown in FIG. 9(F), are formed. The masking sheet 25 is removed upon completion of the etching. The resist patterns 21 a and 22a remaining on the upper surface side and the other surface side of the flexible base 2 are also removed.

An additional step (such as a finishing step) is possible as necessary after forming the embossing projections 3 (3a, 3b) by etching (after completion of the step shown in FIG. 9(F)). The additional step may include cutting each embossing projection 3 (3a, 3b) on its both side surfaces or other portions using a cutting tool on an NC machining apparatus or the like.

In the above-described example, etching is employed to form the plurality of slit-shaped furrows 4 on the rear surface of the flexible base 2 (2a, 2b). This, however, should not be construed in a limiting sense. The furrows 4 may be formed by fine machining.

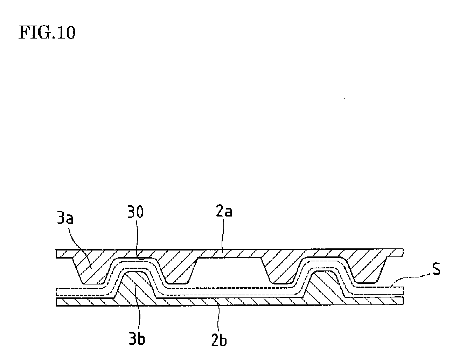

As shown in FIG. 10, each embossing projection 3 (3a, 3b) thus obtained has a tapered cross-section. The depression 30 of the female projection 3a has roundly processed corners to fit with the top portion of the male depression 3b and the edge portion of the top portion. Thus, roundly processing the top portion and the like of the male projection 3b makes the sheet S resistant to breakage and ensures formation of round Braille characters.

The present invention can be embodied and practiced in other different forms without departing from the spirit and essential characteristics of the present invention. Therefore, the above-described embodiments are considered in all respects as illustrative and not restrictive. The scope of the invention is indicated by the appended claims rather than by the foregoing description. All variations and modifications falling within the equivalency range of the appended claims are intended to be embraced therein.

### Industrial Applicability

The flexible die of the present invention is useful in that it rapidly forms a large number of distinct Braille embossed dots with high processing accuracy.

### Description of Reference Numeral

- 1: Flexible die
- 2, 2a, 2b: Flexible base
- 3: Embossing projection
- 3a: Female projection
- 3b: Male projection
- 30: Depression
- 4: Furrow
- 101, 101a, 101b: Magnetic roller
- R: Roller wrapping direction
- S: Processed sheet

## Claims

1. A flexible die for use in an embossing apparatus, the embossing apparatus comprising a pair of flexible bases each comprising embossing projections formed on one surface of each of the pair of flexible bases, the pair of flexible bases being wound around a pair of respective cylindrical rollers disposed in opposing arrangement, the embossing apparatus being configured to carry out Braille embossing by passing a processed sheet through between the pair of cylindrical rollers,
wherein the pair of flexible bases comprise a female flexible base and a male flexible base that are configured to mate with one another, and
wherein the projections of the male flexible base comprise male projections corresponding to a Braille character to be formed on the processed sheet, while the projections of the female flexible base comprise depressions configured to fit with the respective male projections.

2. The flexible die according to claim 1, wherein the depressions of the female flexible base are configured to fit with the respective male projections with a gap relative to an inner circumferential surface of each of the male projections.

3. The flexible die according to claim 1 or 2, wherein the pair of flexible bases each comprise furrows on another surface of each of the pair of flexible bases opposite the one surface on which the embossing projections are formed, the furrows being formed at least over a portion of the other surface corresponding to an area of the one surface in which the embossing projections are formed.
